# EUROPÄISCHE PATENTSCHRIFT

(11) **EP 1 292 944 B1**
(45) Veröffentlichungstag und Bekanntmachung des Hinweises auf die Patenterteilung: **01.02.2006**
(21) Anmeldenummer: 01943430.7
(22) Anmeldetag: 22.05.2001
(51) Int. Cl.: G11B 7/26

(54) **VERFAHREN ZUM HERSTELLEN EINES OPTISCHEN DATENBANDS**
METHOD FOR PRODUCING AN OPTICAL DATA BAND
PROCEDE DE PRODUCTION D'UNE BANDE DE DONNEES OPTIQUE

(30) Priorität: 07.06.2000 DE 10028112
(43) Veröffentlichungstag der Anmeldung: 19.03.2003
(73) Patentinhaber: tesa AG, 20253 Hamburg (DE)
(72) Erfinder: LEIBER, Jörn, 22529 Hamburg (DE); MÜSSIG, Bernhard, 21218 Seevetal (DE); STADLER, Stefan, 22359 Hamburg (DE)
(74) Vertreter: UEXKÜLL & STOLBERG
(86) Internationale Anmeldenummer: PCT/EP2001/005875
(87) Internationale Veröffentlichungsnummer: WO 2001/095320

(56) Entgegenhaltungen:
- EP-A- 0 528 134
- DE-U- 29 816 802

## Beschreibung

Die Erfindung betrifft ein Verfahren zum Herstellen eines Datenspeichers mit einem optischen Informationsträger.

In der DE 298 16 802 ist ein Datenspeicher mit einem optischen Informationsträger beschrieben, der eine Polymerfolie enthält. Als Material für die Polymerfolie werden Polymethylmethacrylatsowie ein von der Beiersdorf AG unter der Bezeichnung "tesafilm kristallklar" vertriebener Polymerfilm genannt, der biaxial orientiertes Polypropylen aufweist. Bei diesem Datenspeicher ist die Polymerfolie in mehreren Schichten oder Lagen spiralartig auf einen Wickelkern aufgewickelt, wobei sich zwischen benachbarten Lagen jeweils eine Adhäsionsschicht befindet. Die Adhäsionsschicht besteht aus einem Acrylatkleber. In den Datenspeicher lassen sich Informationen einschreiben, indem die Polymerfolie mit Hilfe eines Schreibstrahls eines Datenlaufwerks lokal erwärmt wird, wodurch sich die Brechzahl und damit das Reflexionsvermögen (Reflektivität) an der Grenzfläche der Polymerfolie lokal ändern. Dies kann mit Hilfe eines Lesestrahls in dem Datenlaufwerk erfaßt werden. Durch Fokussieren des Schreibstrahls oder des Lesestrahls läßt sich Information gezielt in eine vorgewählte Lage des Informationsträgers einschreiben bzw. daraus auslesen. Um das lokale Erwärmen der Polymerfolie zu erleichtern, kann der Polymerfolie ein Absorber (z.B. ein Farbstoff) zugeordnet sein, der den Schreibstrahl bevorzugt absorbiert und die dabei erzeugte Wärme lokal an die Polymerfolie abgibt. Der Wickelkern kann optisch transparent sein und in seinem Zentrum eine Aussparung aufweisen, die zum Aufnehmen der Schreib- und Leseeinrichtung eines Datenlaufwerks dient. Dabei wird die Schreib- und Leseeinrichtung relativ zu dem Datenspeicher bewegt, während der Datenspeicher ruht, so daß der Datenspeicher nicht im Hinblick auf eine schnelle Rotationsbewegung ausgewuchtet zu sein braucht.

Bei dem vorbekannten Datenspeicher ist die aufwendige Herstellung nachteilig. So müssen auf die Polymerfolie eine Schicht mit Absorber-Farbstoff und danach eine Adhäsionsschicht aufgetragen werden. Anschließend wird diese Schichtenfolge spiralartig aufgewickelt, so daß mehrere zur Informationsspeicherung eingerichtete Schichtenfolgen übereinander zu liegen kommen. Die vielen Einzelschritte bei der Herstellung wirken sich ungünstig auf die Kosten aus.

In EP-A-0 528 134 ist ein optisches Band mit einem mehrschichtigen Polyesterfilm und einer zusätzlichen Aufzeichnungsschicht beschrieben. Die Polyesterschichten werden koextrudiert. Der mehrschichtige Polyesterfilm dient als Basis und verleiht dem optischen Band günstige Eigenschaften, auch beim Aufspulen und Abspulen. Zur Informationsspeicherung ist eine separate Aufzeichnungsschicht aus Ge₂₂Sb₂₈Te₅₀ oder einem vergleichbaren Material vorgesehen, die nachträglich auf die Polyesterschichten aufgebracht wird.

Es ist Aufgabe der Erfindung, ein Verfahren zum Herstellen eines Datenspeichers mit einem optischen Informationsträger, der mehrere zur Informationsspeicherung eingerichtete, übereinanderliegende Schichtenfolgen mit jeweils einem Polymerträger und einer Zwischenschicht aufweist, zu schaffen, das kostengünstig ist und Datenspeicher hoher Qualität liefert.

Diese Aufgabe wird gelöst durch ein Verfahren mit den Merkmalen des Anspruchs 1. Vorteilhafte Ausgestaltungen der Erfindung ergeben sich aus den abhängigen Ansprüchen.

Das erfindungsgemäße Verfahren dient zum Herstellen eines Datenspeichers mit einem optischen Informationsträger, der mehrere zur Informationsspeicherung eingerichtete Schichtenfolgen mit jeweils einem Polymerträger und einer Zwischenschicht aufweist. Bei diesen Schichtfolgen wird also eine Schicht oder Lage durch einen Polymerträger gebildet, und es ist mindestens eine weitere Lage vorgesehen, nämlich eine Zwischenschicht. Die Zwischenschicht kann z.B. als Adhäsionsschicht eingerichtet sein, um eine Schichtenfolge mit einer benachbarten Schichtenfolge zu verkleben. Eine Schichtenfolge kann aber auch zusätzliche Schichten aufweisen, z.B. eine Schicht mit einem Absorber-Farbstoff. Bei dem optischen Informationsträger sind mehrere derartige Schichtenfolgen übereinanderliegend angeordnet. Erfindungsgemäß werden mehrere Schichten mindestens einer Schichtenfolge koextrudiert.

Durch das Koextrudieren mehrerer Schichten werden mehrere Schichten einer Schichtenfolge gleichzeitig oder praktisch gleichzeitig erstellt, was Arbeitsgänge einspart und sich günstig auf die Herstellungskosten des Datenspeichers auswirkt. Vorzugsweise werden sämtliche Schichten einer Schichtenfolge koextrudiert, so daß das Koextrudat zu dem fertigen optischen Informationsträger weiterverarbeitet werden kann, ohne daß weitere einzelne Schichten hinzugefügt werden müssen.

Es gibt grundsätzlich mehrere Möglichkeiten, wie der optische Informationsträger aus einer Schichtenfolge oder mehreren Schichtenfolgen angefertigt werden kann.

Bei einer Ausführungsform des Verfahrens werden die einer Schichtenfolge zugeordneten Schichten koextrudiert, und der Informationsträger wird daraus spiralartig gewickelt. Auf diese Weise bildet jede Windung der spiralartigen Anordnung eine zur Informationsspeicherung eingerichtete Lage oder Schichtenfolge des optischen Informationsträgers. Da das Extrudat die Dicke nur einer Schichtenfolge hat, ändert sich der radiale Abstand des Polymerträgers von der Wickelachse des Datenspeichers über eine Windung relativ wenig, so daß beim Auslesen oder Einschreiben von Information in den Datenspeicher ein Lesestrahl bzw. Schreibstrahl über die Schichtenfolge einer Windung problemlos nachfokussiert werden kann.

Bei einer anderen Ausgestaltung des Verfahrens werden die mehreren Schichtenfolgen zugeordneten Schichten gemeinsam koextrudiert, und der Informationsträger wird daraus spiralartig gewickelt. Im Gegensatz zu der zuvor erwähnten Ausgestaltung werden also die Schichten für mehrere Schichtenfolgen gemeinsam koextrudiert, so daß für einen Datenspeicher mit einer gegebenen Zahl von Schichtenfolgen das Koextrudat mit einer geringeren Zahl von Windungen gewickelt wird als bei der zuvor erläuterten Ausführungsform des Verfahrens. Allerdings ist wegen der größeren Dicke des Koextrudats die radiale Verschiebung bei jeder Windung größer als bei der zuvor erläuterten Ausführungsform. Mit Hilfe eines auf den Datenspeicher abgestimmten Laufwerks läßt sich ein Lesestrahl oder Schreibstrahl dennoch über den Verlauf einer Windung des Koextrudats nachfokussieren.

Es können auch die Schichten meherer und vorzugsweise aller Schichtenfolgen gemeinsam koextrudiert werden. In diesem Fall können die gemeinsam koextrudierten Schichten nach dem Extrudieren zu einem Ring gebogen werden. Eine Alternative ist es, die gemeinsam koextrudierten Schichten nach dem Extrudieren wendelartig zu einer Hohlzylinderform zu wickeln (wobei an den Stirnseiten der Hohlzylinderform Teile der Endbereiche des Koextrudats vorstehen können). Aus einer Hohlzylinderform lassen sich ringförmige Informationsträger für mehrere Datenspeicher schneiden. Bei diesen Ausführungsformen haben die einzelnen Schichtenfolgen keinen spiralartigen Verlauf, sondern sind jeweils in sich geschlossen. So können die Schichten der Schichtenfolgen im Querschnitt des Informationsträgers z.B. die Form konzentrischer Kreisringe haben. In diesem Fall ist es besonders einfach, Information in den Datenspeicher zu schreiben oder daraus auszulesen, da ein Schreibstrahl bzw. ein Lesestrahl über den Verlauf einer Schichtenfolge nicht oder allenfalls geringfügig zum Ausgleichen von Toleranzen nachfokussiert werden muß.

Bei einer weiteren vorteilhaften Ausgestaltung des Verfahrens werden die Schichten aller Schichtenfolgen in Form eines nahtlosen Rohrs gemeinsam koextrudiert, wobei die einzelnen Schichten vorzugsweise konzentrisch zueinander angeordnet werden. Aus einem derartigen Rohr lassen sich ringförmige Informationsträger für mehrere Datenspeicher schneiden. Es werden also nur wenige Fertigungsschritte zum Herstellen eines Datenspeichers benötigt, der zudem noch formstabil ist und wegen seines konzentrischen Aufbaus in günstiger Weise ausgelesen bzw. beschrieben werden kann.

Die Brechzahl des Polymerträgers ist lokal durch Erwärmung veränderbar. Dabei ist dem Polymerträger ein Absorber zugeordnet, der dazu eingerichtet ist, einen Schreibstrahl zumindest teilweise zu absorbieren und die dabei erzeugte Wärme zumindest teilweise lokal an den Polymerträger abzugeben. Der Absorber enthält z.B. Farbstoffmoleküle, die in dem Polymerträger oder in einer zu dem Polymerträger benachbarten Schicht, z.B. der Zwischenschicht, enthalten sind, und ermöglicht eine zur Veränderung der Brechzahl ausreichende lokale Erwärmung des Polymerträgers bei relativ geringer Intensität des Schreibstrahls.

Bei einer bevorzugten Ausgestaltung des Verfahrens werden koextrudierte Schichten nach dem Extrudieren biaxial verstreckt. Ein derartiger Verfahrensschritt läßt sich z.B. an Koextrudaten mit der Dicke einer Schichtenfolge oder mehrerer Schichtenfolgen durchführen, die später gewickelt oder gebogen werden. Vorzugsweise wird als Polymerträger eine Polymerfolie angewendet, d.h. beim Koextrudieren und gegebenenfalls Verstrecken erhält der Polymerträger eine Schichtdicke, die der Dicke einer typischen Polymerfolie entspricht und z.B. zwischen 10 µm und 100 µm liegt, aber auch kleiner oder größer sein kann. Als Material für den Polymerträger kommt z.B. Polypropylen in Frage, das nach dem biaxialen Verstrecken zu biaxial orientiertem Polypropylen (BOPP) wird. Wenn Polypropylen nach der Koextrusion in zwei Ebenen vorgespannt wird, wird im Material eine hohe Eigenenergie gespeichert. Bei einer lokalen Erwärmung, z.B. durch einen Schreibstrahl, kommt es dann zu einer starken Materialänderung durch Rückverformung, und zwar bereits bei Deposition einer relativ geringen Energiemenge pro Flächeneinheit. Auf diese Weise läßt sich z.B. eine Änderung der Brechzahl von etwa 0,2 über eine Fläche für eine gespeicherte Informationseinheit mit einem Durchmesser oder einer Seitenlänge von etwa 1 µm erzielen, was mit Hilfe eines Lesestrahls gut erfaßbar ist. Eine Polymerfolie aus biaxial orientiertem Polypropylen eignet sich daher gut als Polymerträger, dessen Brechzahl lokal durch Erwärmung veränderbar ist. Andere Materialien als Polypropylen sind jedoch für den Polymerträger ebenfalls denkbar.

Als Zwischenschicht einer Schichtenfolge kann eine Adhäsionsschicht angewendet werden, mit deren Hilfe benachbarte Schichtenfolgen miteinander verklebt werden. Als Adhäsionsmittel eignen sich z.B. ein gasblasenfreier Acrylatkleber oder eine Acrylat-Hotmeltmasse. Vorzugsweise weicht die Brechzahl der Zwischenschicht nur geringfügig von der Brechzahl des Polymerträgers ab, um störende Reflexionen eines Lesestrahls oder eines Schreibstrahls an einer Grenzschicht zwischen einer Polymerträgerlage und einer benachbarten Zwischenschicht zu minimieren. Besonders vorteilhaft ist es, wenn der Unterschied der Brechzahlen kleiner als 0,005 ist. Ein bestehender Unterschied der Brechzahlen kann jedoch zum Formatieren des Datenspeichers genutzt werden. So ist es.z.B. bei dem oben erläuterten nahtlos extrudierten Rohr möglich, in jeder Schichtenfolge den Polymerträger durch eine Zwischenschicht (die hier nicht als Adhäsionsschicht ausgestaltet sein muß) mit geringfügig abweichender Brechzahl optisch von dem Polymerträger der benachbarten Schichtenfolge abzugrenzen.

Bei einer bevorzugten Ausgestaltung des Verfahrens wird der Informationsträger um einen zentralen Kern ausgebildet. So kann z.B. ein Koextrudat mit den einer Schichtenfolge oder mehreren Schichtenfolgen zugeordneten Schichten um einen zentralen Kern in Form eines Wickelkörpers gewickelt werden. Danach kann der Wickelkörper zur Stabilisierung am Datenspeicher verbleiben. Bei anderen Ausgestaltungen ist der zentrale Kern lediglich ein Hilfsmittel für den Herstellungsvorgang und wird nach dem Wickeln entfernt.

Im folgenden wird die Erfindung anhand von Ausführungsbeispielen näher beschrieben. Die Zeichnungen zeigen in
- Figur 1: einen Datenspeicher, der nach dem erfindungsgemäßen Verfahren hergestellt ist, in schematischer perspektivischer Darstellung, wobei in einer Aussparung im Zentralbereich des Datenspeichers Teile eines auf den Datenspeicher abgestimmten Laufwerks angeordnet sind,
- Figur 2: eine schematische Darstellung eines Extruderkopfes, mit dem die Schichten einer Schichtenfolge des Informationsträgers des Datenspeichers aus Figur 1 koextrudiert werden,
- Figur 3: einen schematischen Querschnitt durch einen Datenspeicher, bei dem die Schichten aller Schichtenfolgen des Informationsträgers gemeinsam koextrudiert und zu einem Ring gebogen sind,
- Figur 4: eine schematische perspektivische Ansicht einer Hohlzylinderform, die wendelartig aus gemeinsam koextrudierten Schichten gewickelt ist und aus der ringförmige Informationsträger für mehrere Datenspeicher geschnitten werden, und
- Figur 5: einen schematischen Querschnitt durch einen Datenspeicher, bei dem die Schichten aller Schichtenfolgen des Informationsträgers in Form eines nahtlosen Rohrs gemeinsam koextrudiert sind.

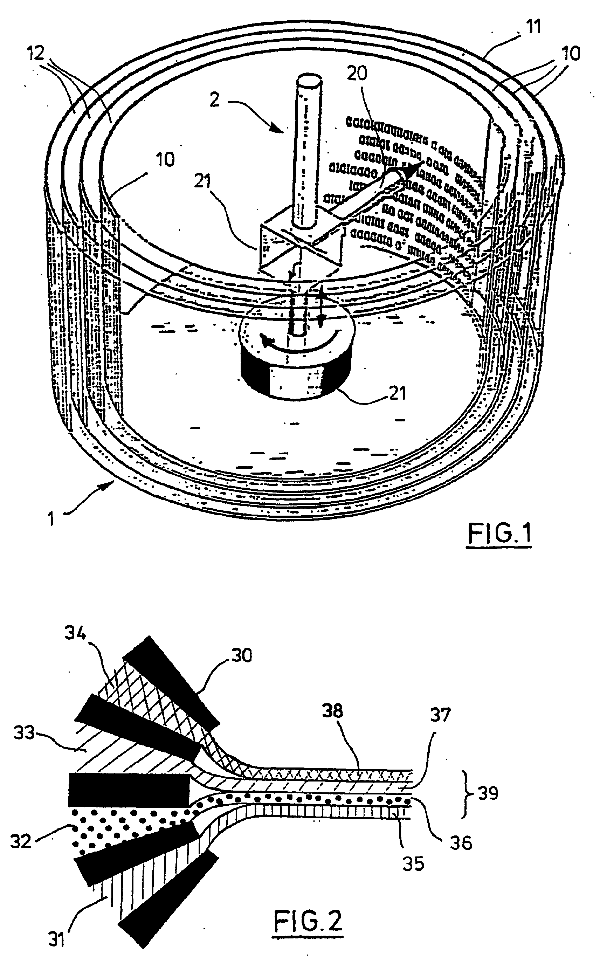

Figur 1 zeigt in schematischer Darstellung einen Datenspeicher 1 und eine Schreib- und Leseeinrichtung 2 eines auf den Datenspeicher 1 abgestimmten Laufwerks. Der Datenspeicher 1 weist einen optischen Informationsträger mit einer Anzahl von Lagen 10 eines zur Informationsspeicherung dienenden Polymerträgers in Form einer Polymerfolie 11 auf, die spiralartig auf einen optisch transparenten Wickelkern aufgewickelt ist. Der Wickelkern ist in Figur 1 der Übersichtlichkeit halber nicht dargestellt; er befindet sich innerhalb der innersten Lage 10. Zur besseren Veranschaulichung sind die einzelnen Lagen 10 der Polymerfolie 11 in Figur 1 als konzentrische Kreisringe gezeigt, obwohl die Lagen 10 im Ausführungsbeispiel durch spiralartiges Wickeln der Polymerfolie 11 ausgebildet sind. Zwischen benachbarten Lagen 10 der Polymerfolie 11 ist jeweils eine als Adhäsionsschicht dienende Zwischenschicht 12 angeordnet. Im Ausführungsbeispiel hängen die einzelnen Adhäsionsschichten 12 also alle zusammen und haben als Ganzes ebenso wie die Polymerfolie 11 einen spiralartigen Verlauf. Aus Gründen der Übersichtlichkeit sind die Adhäsionsschichten 12 in Figur 1 in nicht maßstäblich vergrößerter Dicke eingezeichnet. Eine Lage 10 der Polymerfolie 11 bildet zusammen mit einer benachbarten Adhäsionsschicht 12 und weiteren, in Figur 1 der Übersichtlichkeit halber nicht eingezeichneten Schichten (darunter eine Absorberschicht, die Absorber-Farbstoff enthält) eine Schichtenfolge, wie weiter unten anhand von Figur 2 erläutert.

Im Ausführungsbeispiel besteht die Polymerfolie 11 aus biaxial orientiertem Polypropylen (BOPP) und wurde vor dem Wickeln (zusammen mit den anderen einer Schichtenfolge zugeordneten Schichten) in beiden Flächenrichtungen vorgespannt (siehe unten). Die Polymerfolie 11 hat im Ausführungsbeispiel eine Dicke von 35 µm; andere Dicken im Bereich von 10 µm bis 100 µm oder auch außerhalb dieses Bereichs liegende Dicken sind ebenfalls denkbar. Die Adhäsionsschichten 12 sind gasblasenfrei und bestehen im Ausführungsbeispiel aus Acrylatkleber, bei einer Dicke von 23 µm,
wobei bevorzugte Schichtdicken zwischen 1 µm und 40 µm liegen.

Im Ausführungsbeispiel enthält der Datenspeicher 1 zwanzig Lagen 10 der Polymerfolie 11 und hat einen Außendurchmesser von etwa 30 mm. Seine Höhe beträgt 19 mm. Eine andere Anzahl von Lagen 10 oder andere Abmessungen sind ebenfalls möglich. Die Anzahl der Wicklungen oder Lagen 10 kann z.B. zwischen zehn und dreißig liegen, aber auch größer als dreißig sein.

Die im Innenraum des Wickelkerns angeordnete Schreib- und Leseeinrichtung 2 ist im Prinzip z.B. aus der DVD-Technologie bekannt. Die Schreib- und Leseeinrichtung 2 enthält einen Schreib-und Lesekopf 20, der mit Hilfe einer Mechanik 21 in den Richtungen der eingezeichneten Pfeile gedreht und axial hin- und herbewegt werden kann. Der Schreib- und Lesekopf 20 weist optische Elemente auf, mit deren Hilfe ein von einem in Figur 1 nicht dargestellten Laser erzeugter Lichtstrahl (z.B. der Wellenlänge 630 nm oder 532 nm) auf die einzelnen Lagen 10 der Polymerfolie 11 fokussiert werden kann. Da der Schreib- und Lesekopf 20 mit Hilfe der Mechanik 21 bewegt wird, kann er alle Lagen 10 des Datenspeichers 1 vollständig abtasten. Im Ausführungsbeispiel ruht dabei der Datenspeicher 1. Er braucht also nicht im Hinblick auf eine hohe Rotationsgeschwindigkeit ausgewuchtet zu sein (und muß auch nicht abgewickelt oder umgespult werden), im Gegensatz zu dem Schreib- und Lesekopf 20. Der Übersichtlichkeit halber sind in Figur 1 die zum Auswuchten des Schreib- und Lesekopfs 20 vorgesehenen Elemente nicht gezeigt. Der erwähnte Laser befindet sich außerhalb des Schreib- und Lesekopfes 20 und ist stationär; der Laserstrahl wird über optische Elemente in den Schreib- und Lesekopf 20 gelenkt.

Zum Speichern oder Einschreiben von Information in den Datenspeicher 1 wird der Laser im Ausführungsbeispiel mit einer Strahlleistung von etwa 1 mW betrieben. Der Laserstrahl dient dabei als Schreibstrahl und wird auf eine vorgewählte Lage 10 der Polymerfolie 11 fokussiert, so daß der Strahlfleck kleiner als 1 µm ist. Die Lichtenergie wird dabei in Form kurzer Pulse von etwa 10 µs Dauer eingebracht. Die Energie des Schreibstrahls wird in dem Strahlfleck absorbiert, begünstigt durch den Absorber in der benachbarten Absorberschicht, was zu einer lokalen Erwärmung der Polymerfolie 11 und damit zu einer lokalen Änderung der Brechzahl und der Reflektivität führt. Beim Schreibvorgang ist der Schreibstrahl in den zu der betrachteten Lage 10 der Polymerfolie 11 benachbarten Lagen defokussiert, so daß die benachbarten Lagen der Polymerfolie 11 lokal nur geringfügig erwärmt werden und dort die gespeicherte Information nicht verändert wird.

Um gespeicherte Information aus dem Datenspeicher 1 auszulesen, wird der Laser im Ausführungsbeispiel im Continuous-Wave-Modus (CW-Modus) betrieben. In Abhängigkeit von der gespeicherten Information wird der auf die gewünschte Stelle fokussierte Lesestrahl reflektiert, und die Intensität des reflektierten Strahls wird von einem Detektor in der Schreib- und Leseeinrichtung 2 erfaßt.

Der Datenspeicher kann auch von einer Ausführungsform sein, die vom Benutzer nicht beschreibbar ist. In diesem Fall enthält er vom Hersteller eingeschriebene Informationseinheiten. Eine Schreibfunktion im Datenlaufwerk des Benutzers erübrigt sich dann.

In der Polymerfolie 11 sind die Informationseinheiten durch Änderung der optischen Eigenschaften in einem Bereich mit einer bevorzugten Größe von weniger als 1 µm ausgebildet. Dabei kann die Information binär gespeichert sein, d.h. die lokale Reflektivität nimmt an der Stelle einer Informationseinheit nur zwei Werte an. Das heißt, wenn die Reflektivität oberhalb eines festgelegten Schwellenwerts liegt, ist an der betrachteten Stelle des Informationsträgers z.B. eine "1" gespeichert, und wenn sie unterhalb dieses Schwellenwerts oder unterhalb eines anderen, niedrigeren Schwellenwerts liegt, entsprechend eine "0". Es ist aber auch denkbar, die Information in mehreren Graustufen abzuspeichern. Dies ist möglich, wenn sich die Reflektivität der Polymerfolie an der Stelle einer Informationseinheit durch definiertes Einstellen der Brechzahl auf gezielte Weise verändern läßt, ohne daß dabei eine Sättigung erreicht wird.

Figur 2 veranschaulicht in schematischer Weise, wie zum Herstellen des Datenspeichers 1 aus Figur 1 die einer Schichtenfolge zugeordneten Schichten (darunter die Polymerfolie 11 und die zusammenhängende Adhäsionsschicht 12) koextrudiert werden.

Der dazu verwendete Extruder hat einen Extruderkopf 30 mit mehreren Austrittsöffnungen, aus denen ein Folienrohmaterial 31 (im Ausführungsbeispiel Polypropylen), ein Absorber 32, ein Primer 33 und ein Adhäsionsmittel 34 (im Ausführungsbeispiel eine Acrylatmasse) unter erhöhter Temperatur austreten. Hinter dem Extruderkopf 30 laufen diese vier Ausgangsmaterialien zusammen und formen beim Abkühlen vier Schichten, nämlich die Polymerfolie, die hier mit 35 bezeichnet ist, eine Absorberschicht 36, eine Primerschicht 37 und die Adhäsionsschicht, die hier mit 38 bezeichnet ist. Die vier Schichten 35 bis 38 haften aneinander und bilden eine Schichtenfolge 39.

Die Absorberschicht 36 weist einen in ein Bindemittel eingebetteten Absorber-Farbstoff auf, der die Wärmeerzeugung mit Hilfe eines Schreibstrahls erleichtert (siehe oben). Je nach Ausführungsform kann der Absorber-Farbstoff auch in der Polymerfolie 35 oder der Adhäsionsschicht 38 enthalten sein, wobei diese dann direkt auf die Polymerfolie 35 folgen sollte, so daß in diesen Fällen eine separate Absorberschicht 36 entbehrlich ist. Die Primerschicht 37 dient der Haftvermittlung zwischen der Absorberschicht 36 und der Adhäsionsschicht 38 und ist je nach Ausführungsform ebenfalls entbehrlich.

Nach dem Koextrudieren werden im Ausführungsbeispiel die koextrudierten Schichten 35, 36, 37, 38 gemeinsam biaxial verstreckt, wodurch die Polymerfolie 35 zu einer Folie aus biaxial orientiertem Polypropylen (BOPP) wird, einem Material, in dem eine hohe Eigenenergie gespeichert ist (siehe oben).

In einem Beispiel im,Zusammenhang mit den Figuren 1 und 2 hat der Extruderkopf 30 eine Temperatur von 120-150 °C. Als Absorber 32 dient eine Mischung von 0,01-0,1 Gew.-% des Absorber-Farbstoffs Sudanrot 7B in Acrylat-Hotmelt als Bindemittel. Der Primer 33 besteht aus einem Mischpolymerisat mit Anteilen von Acrylnitril. Das Koextrudat wird in Längsrichtung (d.h. in der Richtung, in der die Materialien 31, 32, 33, 34 aus dem Extruderkopf 30 austreten) um 500% verstreckt und in Querrichtung um 700%. Nach dem biaxialen Verstrecken hat die Polymerfolie 35 eine Dicke von ca. 35 µm, die Absorberschicht 36 eine Dicke von 10-20 µm, die Primerschicht 37 eine Dicke von 1-3 µm und die Adhäsionsschicht 38 eine Dicke von 10-20 µm. Je nach Ausführungsform sind andere Herstellungsbedingungen und andere Zusammensetzungen und Dimensionen der einzelnen Schichten möglich.

Das Koextrudat mit der Schichtenfolge 39 wird für die weitere Herstellung des Datenspeichers 1 spiralartig auf den weiter oben erwähnten optisch transparenten Wickelkern aufgewickelt, so daß ein optischer Informationsträger mit einer Anzahl von übereinanderliegenden Schichtenfolgen mit jeweils einem Polymerträger (der Polymerfolie 35), einer Absorberschicht 36, einer Primerschicht 37 und einer Adhäsionsschicht 38 entsteht. Dabei weist die Adhäsionsschicht 38 des Koextrudats zu dem Wickelkern, so daß die innerste Wicklung oder Schichtenfolge mit dem Wickelkern verklebt.

Bei einer Varianten des anhand von Figur 2 erläuterten Herstellungsverfahrens werden die mehreren Schichtenfolgen zugeordneten Schichten gemeinsam koextrudiert. Der dazu verwendete Extruderkopf hat für jede einzelne Schicht eine eigene Austrittsöffnung. Im Ergebnis liegen die gemeinsam koextrudierten Schichten alle übereinander. Wenn z.B. jede Schichtenfolge wie in Figur 2 vier Schichten aufweist und die Schichten von zwei Schichtenfolgen koextrudiert werden sollen, hat der zugehörige Extruderkopf acht Austrittsöffnungen, und in dem Koextrudat liegen acht Schichten übereinander. Das Koextrudat kann nach dem Extrudieren biaxial verstreckt werden, wie oben erläutert. Anschließend läßt sich aus dem Koextrudat der Informationsträger eines Datenspeichers wickeln, ähnlich wie im Zusammenhang mit Figur 2 beschrieben.

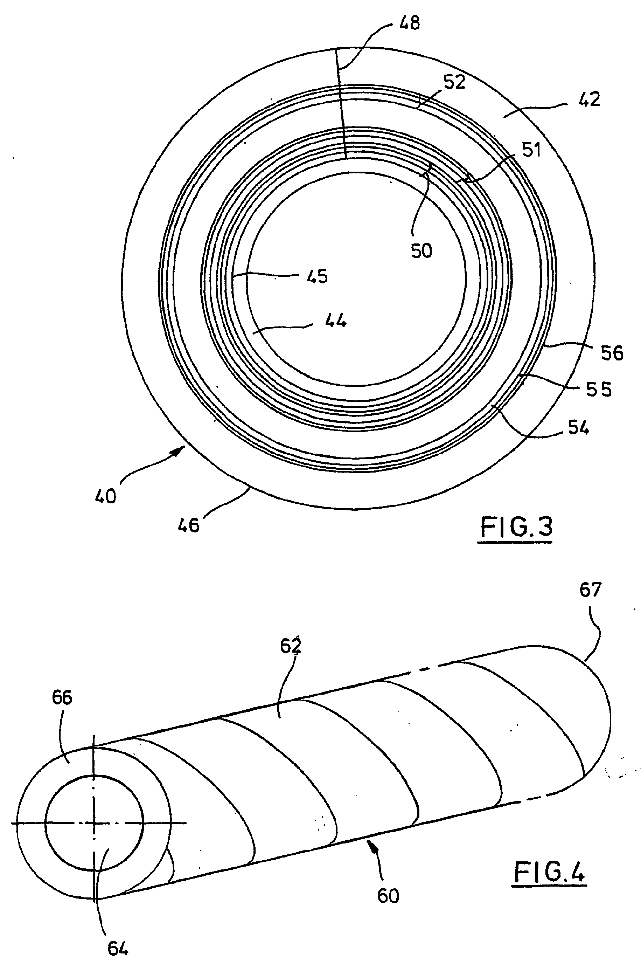

Figur 3 zeigt einen schematischen Querschnitt durch einen Datenspeicher 40, dessen optischer Informationsträger ein Koextrudat 42 aufweist, bei dem in der zuvor erläuterten Weise die Schichten sämtlicher Schichtenfolgen gemeinsam koextrudiert sind. Das Koextrudat 42 ist um einen zentralen Kern 44 zu einem Ring gebogen gelegt und erstreckt sich in radialer Richtung von der Peripherie 45 des Kerns 44 bis zu einer äußeren Peripherie 46. Die Enden des Koextrudats 42 stoßen an einer Linie 48 zusammen. Die einzelnen Schichten des Informationsträgers verlaufen also nicht spiralartig, wie bei den zuvor erläuterten Beispielen, sondern im wesentlichen konzentrisch. Die Linie 48 wird von der Schreib- und Leseeinrichtung erkannt und steht der Funktion des Datenspeichers 40 daher nicht im Wege.

Die beiden innersten Schichtenfolgen 50 und 51 sowie eine weitere Schichtenfolge 52 sind in Figur 3 in nicht maßstäblicher übertriebener Dicke eingezeichnet. Jede der Schichtenfolgen hat den gleichen Aufbau, wie anhand der Schichtenfolge 52 erläutert: Auf einen Polymerträger in Form einer Polymerfolie 54 folgt eine Absorberschicht 55 und darauf eine weitere Zwischenschicht 56.

Bei einer Varianten des zu dem Datenspeicher gemäß Figur 3 führenden Verfahrens werden die Schichten einer Anzahl von Schichtenfolgen, aber nicht aller Schichtenfolgen, gemeinsam koextrudiert. Nachdem aus einem Koextrudat ein Ring wie in Figur 3 gebogen worden ist, wird darum ein weiterer Ring des Koextrudats gelegt. Gegebenenfalls können radial nach außen noch weitere Ringe aufgebracht werden. Bei dieser Ausführungsform haben die einzelnen Schichten wiederum einen weitgehend konzentrischen Verlauf. Auf diese Weise können Informationsträger hergestellt werden, die eine relativ große Ausdehnung in radialer Richtung haben, was aus einem einzigen Koextrudat wegen dessen begrenzter Biegsamkeit nicht ohne weiteres möglich wäre.

Figur 4 zeigt eine Hohlzylinderform 60, die wendelartig aus einem Koextrudatstreifen 62 gewickelt ist. Der Koextrudatstreifen 62 enthält die gemeinsam koextrudierten Schichten mehrerer und vorzugsweise aller Schichtenfolgen für mehrere optische Informationsträger und wird im Ausführungsbeispiel um eine in Figur 4 nicht eingezeichnete zylindrische Form gewickelt, die im Zentralbereich 64 verläuft. An den Stirnseiten 66 und 67 der Hohlzylinderform 60 kann der Koextrudatstreifen 62 überstehen, was in Figur 4 nicht eingezeichnet ist. Gegebenenfalls können ein oder mehrere weitere Lagen eines Koextrudatstreifens wendelartig aufgewickelt werden, ähnlich wie bei der Varianten des anhand von Figur 3 erläuterten Verfahrens. Aus einer Hohlzylinderform 60 können ringförmige Informationsträger für mehrere Datenspeicher geschnitten oder gesägt werden.

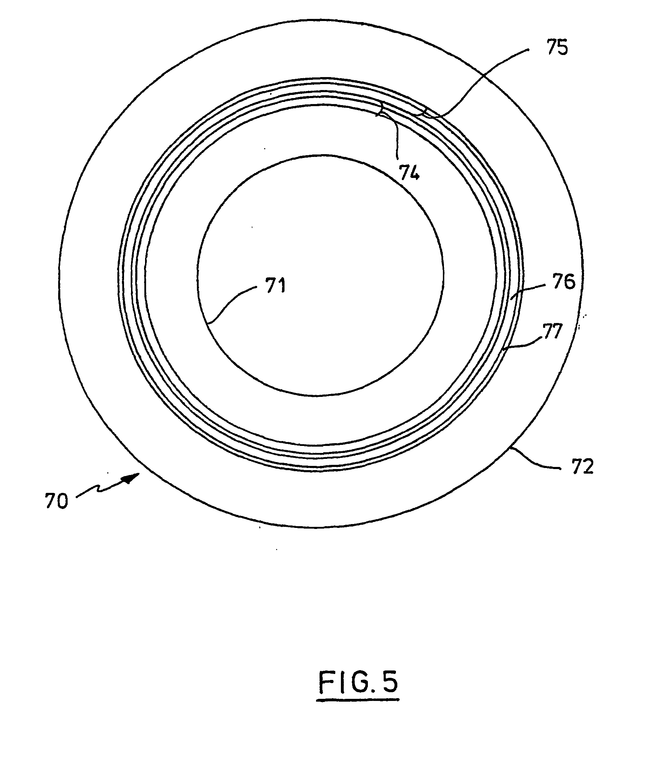

Figur 5 zeigt das Ergebnis einer weiteren Ausführungsform des Verfahrens. Hier ist in schematischem Querschnitt ein Datenspeicher 70 dargestellt, dessen optischer Informationsträger eine innere Peripherie 71 und eine äußere Peripherie 72 hat. Der Informationsträger ist ringförmig und aus einem nahtlosen Rohr geschnitten oder gesägt. Beim Fertigen des nahtlosen Rohres werden die Schichten aller Schichtenfolgen des Datenspeichers 70 gemeinsam koextrudiert. Dabei sind die einzelnen Schichten vorzugsweise konzentrisch zueinander angeordnet. In Figur 5 sind als Beispiel zwei Schichtenfolgen 74 und 75 in nicht maßstäblich vergrößerter Dicke eingezeichnet, die jeweils aus zwei Schichten bestehen, wie anhand der Schichtfolge 75 verdeutlicht. Dies sind die Schicht für einen Polymerträger 76 sowie eine Absorberschicht 77. Eine Adhäsionsschicht ist bei dieser Ausführungsform entbehrlich, da alle Schichten durch gemeinsame Koextrusion gefertigt werden und von Anfang an aneinander haften. Das Material für den Polymerträger 76 oder auch ein anderes Material kann im Bereich der inneren Peripherie 71 und der äußeren Peripherie 72 in größerer Materialstärke eingebracht werden, um eine Wandung für den Informationsträger des Datenspeichers 70 auszubilden.

Auch bei dem Datenspeicher 70 ist es denkbar, den Polymerträger 76 biaxial zu verstrecken. Dies kann zum Beispiel erfolgen, indem bei erhöhter Temperatur ein Innendruck in radialer Richtung auf die innere Peripherie 71 des Rohrs und entsprechend in longitudinaler Richtung auf die (verschlossenen) Stirnseiten des Rohrs einwirkt. Vorzugsweise werden aus dem Rohr die ringförmigen Informationsträger für mehrere Datenspeicher 70 geschnitten oder gesägt.

## Patentansprüche

1. Verfahren zum Herstellen eines Datenspeichers (1; 40; 70) mit einem optischen Informationsträger, der mehrere zur Informationsspeicherung eingerichtete, übereinanderliegende Schichtenfolgen (10, 12; 39; 50, 51, 52; 74, 75) mit jeweils einem zur Informationsspeicherung eingerichteten Polymerträger (11; 35; 54; 76), dessen Brechzahl lokal durch Erwärmung veränderbar ist, und einer Zwischenschicht (12; 36, 37, 38; 55, 56; 77) aufweist, wobei dem Polymerträger (35; 54; 76) ein Absorber (36; 55; 77) mit Farbstoffmolekülen in der Polymerfolie oder der Zwischenschicht zugeordnet ist, der dazu eingerichtet ist, einen Schreibstrahl zumindest teilweise zu absorbieren und die dabei erzeugte Wärme zumindest teilweise lokal an den Polymerträger (35; 54; 76) abzugeben, **dadurch gekennzeichnet, daß** in dem Verfahren mehrere Schichten (35, 36, 37, 38), darunter der Polymerträger und die Zwischenschicht, mindestens einer Schichtenfolge (39) koextrudiert werden.

2. Verfahren nach Anspruch 1, **dadurch gekennzeichnet, daß** die einer Schichtenfolge (39) zugeordneten Schichten (35, 36, 37, 38) koextrudiert werden und der Informationsträger daraus spiralartig gewickelt wird.

3. Verfahren nach Anspruch 1, **dadurch gekennzeichnet, daß** die mehreren Schichtenfolgen zugeordneten Schichten gemeinsam koextrudiert werden und der Informationsträger daraus spiralartig gewickelt wird.

4. Verfahren nach Anspruch 1, **dadurch gekennzeichnet, daß** die Schichten (54, 55, 56) mehrerer und vorzugsweise aller Schichtenfolgen (50, 51, 52) gemeinsam koextrudiert werden.

5. Verfahren nach Anspruch 4, **dadurch gekennzeichnet, daß** die gemeinsam koextrudierten Schichten (50, 51, 52) nach dem Extrudieren zu einem Ring (42) gebogen werden.

6. Verfahren nach Anspruch 4, **dadurch gekennzeichnet, daß** die gemeinsam koextrudierten Schichten nach dem Extrudieren wendelartig zu einer Hohlzylinderform (60) gewickelt werden.

7. Verfahren nach Anspruch 6, **dadurch gekennzeichnet, daß** aus einer Hohlzylinderform (60) ringförmige Informationsträger für mehrere Datenspeicher geschnitten werden.

8. Verfahren nach Anspruch 1, **dadurch gekennzeichnet, daß** die Schichten (76, 77) aller Schichtenfolgen (74, 75) in Form eines nahtlosen Rohrs gemeinsam koextrudiert werden, wobei die einzelnen Schichten (76, 77) vorzugsweise konzentrisch zueinander angeordnet werden.

9. Verfahren nach Anspruch 8, **dadurch gekennzeichnet, daß** aus einem Rohr ringförmige Informationsträger für mehrere Datenspeicher (70) geschnitten werden.

10. Verfahren nach einem der Ansprüche 1 bis 9, **dadurch gekennzeichnet, daß** koextrudierte Schichten (35, 36, 37, 38) nach dem Extrudieren biaxial verstreckt werden.

11. Verfahren nach einem der Ansprüche 1 bis 10, **dadurch gekennzeichnet, daß** als Polymerträger eine Polymerfolie (11; 35; 54) angewendet wird.

12. Verfahren nach einem der Ansprüche 1 bis 11, **dadurch gekennzeichnet, daß** als Zwischenschicht eine Adhäsionsschicht (12; 38) angewendet wird.

13. Verfahren nach einem der Ansprüche 1 bis 12, **dadurch gekennzeichnet, daß** die Brechzahl der Zwischenschicht (12; 36, 37, 38; 55, 56; 77) nur geringfügig von der Brechzahl des Polymerträgers (11; 35; 54; 76) abweicht.

14. Verfahren nach einem der Ansprüche 1 bis 13, **dadurch gekennzeichnet**, der der Informationsträger um einen zentralen Kern (44) ausgebildet wird.

## Revendications

1. Procédé de fabrication d'une mémoire de données (1; 40; 70) dotée d'un support optique d'informations qui présente plusieurs successions de couches (10, 12; 39; 50, 51, 52; 74, 75) aménagées pour conserver des informations et agencées les unes sur les autres, qui présentent chacune un support polymère (11; 35; 54; 76) aménagé pour conserver des informations et dont on peut localement modifier l'indice de réfraction par chauffage et une couche intermédiaire (12; 36, 37, 38; 55, 56; 77), dans lequel un absorbeur (36; 55; 77) qui présente des molécules de colorant et situé dans le film de polymère ou dans la couche intermédiaire est associé au support polymère (35; 54; 76) et est aménagé pour absorber au moins partiellement un rayon d'écriture et transmettre localement au support polymère au moins une partie de la chaleur produite à cette occasion (35; 54; 76), **caractérisé en ce que**, dans le procédé, plusieurs couches (35, 36, 37, 38) dont le support polymère et la couche intermédiaire d'au moins une succession de couches (39) sont coextrudées

2. Procédé selon la revendication 1, **caractérisé en ce que** les couches (35, 36, 37, 38) associées à une succession de couches (39) sont coextrudées et le support d'informations qui en résulte est enroulé en spirale.

3. Procédé selon la revendication 1, **caractérisé en ce que** les couches associées à plusieurs successions de couches sont coextrudées ensemble et le support d'informations qui en résulte est enroulé en spirale.

4. Procédé selon la revendication 1, **caractérisé en ce que** les couches (54, 55, 56) de plusieurs et de préférence de toutes les successions de couches (50, 51, 52) sont coextrudées ensemble.

5. Procédé selon la revendication 4, **caractérisé en ce qu'**après l'extrusion, les couches (50, 51, 52) coextrudées ensemble sont cintrées en anneau (42).

6. Procédé selon la revendication 4, **caractérisé en ce qu'**après l'extrusion, les couches coextrudées ensemble sont enroulées en hélice pour former une forme (60) en cylindre creux.

7. Procédé selon la revendication 6, **caractérisé en ce que** des supports annulaires d'information pour plusieurs mémoires de données sont découpés dans une forme (60) en cylindre creux.

8. Procédé selon la revendication 1, **caractérisé en ce que** les couches (76, 77) de toutes les successions de couches (74, 75) sont coextrudées ensemble sous la forme d'un tube sans soudure, les différentes couches (76, 77) étant de préférence agencées concentriquement.

9. Procédé selon la revendication 8, **caractérisé en ce que** des supports annulaires d'informations pour plusieurs mémoires de données (70) sont découpés dans un tube.

10. Procédé selon l'une des revendications 1 à 9, **caractérisé en ce que** les couches coextrudées (35, 36, 37, 38) sont étirées biaxialement après l'extrusion.

11. Procédé selon l'une des revendications 1 à 10, **caractérisé en ce que**, comme support polymère, on utilise un film polymère (11; 35; 54).

12. Procédé selon l'une des revendications 1 à 11, **caractérisé en ce que**, comme couche intermédiaire, on utilise une couche d'adhérence (12; 38).

13. Procédé selon l'une des revendications 1 à 12, **caractérisé en ce que** l'indice de réfraction de la couche intermédiaire (12; 36, 37, 38: 55, 56; 77) ne s'écarte que de manière limitée de celui du support polymère (11; 35; 54; 76).

14. Procédé selon l'une des revendications 1 à 13, **caractérisé en ce que** le support d'informations est configuré autour d'une âme centrale (44).

## Claims

1. Method for producing a data memory (1; 40; 70) with an optical information carrier which comprises a plurality of stacked layer sequences (10, 12; 39; 50, 51, 52; 74, 75) designed for information storage, each having a polymer carrier (11; 35; 54; 76) designed for information storage, the refractive index of which can be locally altered by heating, and an intermediate layer (12; 36, 37, 38; 55, 56; 77), the polymer carrier (35; 54; 76) being assigned an absorber (36; 55; 77) with dye molecules in the polymer film or the intermediate layer, which is designed to absorb a write beam at least partially and to locally deliver the heat thereby produced at least partially to the polymer carrier (35; 54; 76), **characterized in that** in the method a plurality of layers (35, 36, 37, 38), including the polymer carrier and the intermediate layer, of at least one layer sequence (39) are coextruded.

2. Method according to Claim 1, **characterized in that** the layers (35, 36, 37, 38) assigned to a layer sequence (39) are coextruded and the information carrier is wound spirally therefrom.

3. Method according to Claim 1, **characterized in that** the layers assigned to a plurality of layer sequences are coextruded together and the information carrier is wound spirally therefrom.

4. Method according to Claim 1, **characterized in that** the layers (54, 55, 56) of a plurality of, and advantageously all, the layer sequences (50, 51, 52) are coextruded together.

5. Method according to Claim 4, **characterized in that** the layers (50, 51, 52) coextruded together are bent into a ring (42) after having been extruded.

6. Method according to Claim 4, **characterized in that** the layers coextruded together are wound in a coil fashion to form a hollow cylindrical shape (60) after having been extruded.

7. Method according to Claim 6, **characterized in that** annular information carriers for a plurality of data memories are cut from a hollow cylindrical shape (60).

8. Method according to Claim 1, **characterized in that** the layers (76, 77) of all the layer sequences (74, 75) are coextruded together in the form of a seamless tube, the individual layers (76, 77) advantageously being arranged concentrically with one another.

9. Method according to Claim 8, **characterized in that** annular information carriers for a plurality of data memories (70) are cut from a tube.

10. Method according to one of Claims 1 to 9, **characterized in that** the coextruded layers (35, 36, 37, 38) are biaxially stretched after having been extruded.

11. Method according to one of Claims 1 to 10, **characterized in that** a polymer film (11; 35; 54) is used as the polymer carrier.

12. Method according to one of Claims 1 to 11, **characterized in that** an adhesion layer (12; 38) is used as the intermediate layer.

13. Method according to one of Claims 1 to 12, **characterized in that** the refractive index of the intermediate layer (12; 36, 37, 38; 55, 56, 77) differs only slightly from the refractive index of the polymer carrier (11; 35; 54; 76).

14. Method according to one of Claims 1 to 13, **characterized in that** the information carrier is formed around a central core (44).
